# EUROPEAN PATENT APPLICATION

(11) **EP 4 137 319 A1**
(43) Date of publication of application: **22.02.2023**
(21) Application number: 22460018.9
(22) Date of filing: 22.03.2022
(51) Int. Cl.: B32B 37/12

(54) **METHOD OF PRODUCING MONOMATERIAL PANELS OF THERMOFORMABLE NONWOVENS**

(30) Priority: 26.03.2021 PL 43742521
(71) Applicant: MARBET Spólka z o.o., 43-346 Bielsko-Biala (PL)
(72) Inventor: GAWLAS, Marek, 43-392 Miedzyrzcecze Dolne (PL); LAKOMIK, Jaroslaw, 43-300 Bielsko-Biala (PL); GIELMUDA, Piotr, 43-344 Bielsko-Biala (PL)
(74) Representative: Rygiel, Andrzej

(57) **Abstract**

The subject of the invention is a method of producing monomaterial panels of thermoformable nonwovens intended for acoustic protection, in particular of walls, and producing acoustic screens in rooms.

The method of producing monomaterial panels of thermoformable nonwovens consists in that from a feeder equipped with unwinders, strips of nonwoven fabric wound on them are fed, which are transported to a thermal tunnel equipped with a flow-through furnace, where they are heated up to the temperature of about 200°C, after which, simultaneously, with a system of belt conveyors, external nonwoven fabric of 300 g.s.m. that does not participate in the heating up process is transported outside of the heating up system. The nonwoven fabric transported through the thermal tunnel is covered with a layer of thermoactive adhesive in the amount of 40 g.s.m. which is activated at the temperature of 200°C, and after passing through the thermal tunnel the heated up internal nonwoven fabric with the activated adhesive is introduced into a mouthpiece with a system of guide rollers, at the same time a layer of the external nonwoven fabric is introduced into the mouthpiece from the external belt conveyors. The glued layers of the internal and external nonwoven fabric are moved into a daylight of a press where the final forming of half-panels and then cooling them down the temperature of 50°C occur. The half-panels are then supplied to a cutting station equipped with a system of grippers which pull them to the desired length, where half-panels are cut off from the strips with cutting tools and prepared for passing them to a feeding manipulator which fetches a cut-off half-panel and forwards it to a WEB adhesive activation station, after which the process of adhesive activation with infrared radiation is activated. After infrared radiation lamps are retracted, the feeding manipulator places on the first half-panel with the activated adhesive the other half-panel, and a set of half-panels prepared in such a way is forwarded to a gluing press and a semi-finished product obtained in such a way is transported by the gripper and the manipulator to a shelving unit and after the adhesive has hardened it is then forwarded for cutting out, and then leaves the line as a finished product.

## Description

The subject of the invention is a method of producing monomaterial panels of thermoformable nonwovens intended for acoustic protection, in particular of walls, and producing acoustic screens in rooms.

So far, walls soundproofing and acoustic screens have been usually made of specially formed, generally homogenous materials, the shape and texture of which are intended to either absorb sounds or to reflect them. In the category of sound-absorbing materials cork, textiles or plastic materials are most often used. The materials used serve also an aesthetic function in interior design.

The purpose of the invention is to develop a method of producing monomaterial panels used as acoustic screens, produced from thermoformable nonwovens and polymer binders of the same chemical nature which will enable trouble-free processing of technological waste created in the production process, and which will allow finished products after they have been naturally worn out as well as fibres resulting from processing of PET bottles to be reprocessed. Products thus obtained will be in the form of standing screens, desk panels which will serve the function of separating work stations from each other, constituting at the same time an aesthetic interior decoration, and due to their properties they will also positively influence the acoustic of the premises where they will be used, and they will also be in the form of hanging panels and wall panels.

It is also assumed that with this method products of various sizes, shapes, external colours will be produced, which at the packaging stage will be equipped with various accessories depending on their later application.

A method of producing monomaterial panels of thermoformable nonwovens according to the invention is characterised in that from a multi-level feeder equipped with unwinders, strips of nonwoven fabric of 1000 ± 100 g.s.m. wound on them are fed in such a way so as to obtain their uniform distribution on the whole surface of belt conveyors that transport them to a thermal tunnel equipped with a flow-through furnace, where they are heated up to the temperature of 200 ± 20°C, after which, simultaneously, with a system of belt conveyors, external nonwoven fabric of 300 ± 30 g.s.m. that does not participate in the heating up process is transported outside of the heating up system, whereby the nonwoven fabric transported through the thermal tunnel is covered with a layer of thermoactive adhesive in the amount of 40 ± 5 g.s.m. which is activated in the temperature of 200 ± 20°C and after passing through the thermal tunnel the heated up internal nonwoven fabric with the activated adhesive is introduced to a mouthpiece with a system of guide rollers, at the same time to the above mentioned mouthpiece a layer or more layers of the external nonwoven fabric are introduced from the external belt conveyors, where preliminary gluing of the layers of the internal nonwoven fabric with the activated adhesive and the external layer introduced to the mouthpiece from the external belt conveyors occurs, from where the preliminarily glued layers of the internal and external nonwoven fabric leaving the mouthpiece are moved into a daylight of a press equipped with at least single- or multi-level system of thermostated pressing tools, where the final forming of half-panels and then cooling them down to the temperature of 50°C ± 10°C occur in order to fix the set shape and design of the product, which is later fed to a cutting station equipped with a system of grippers which pull the half-panel strips leaving the forming press to a desired length, where half-panels are cut from the strips with controlled cutting devices and prepared for passing to a feeding manipulator which after receiving a signal from the cutting station collects the cut-off half-panel and passes it to a WEB adhesive activation station which activates the cycle of unwinding, cutting and feeding the layer of thermoactive WEB adhesive in the amount of 60 ± 5 g.s.m., preferably in the form of nonwoven fabric, after which the process of activation of the adhesive with infrared radiation emitted by a system of IR lamps which switches on consecutive sections of radiators providing the temperature from 90 to 140°C activating the adhesive, is activated, and after the IR lamps are retracted, the feeding manipulator applies on the first half-panel with the activated adhesive the other half-panel, and the set of half-panels prepared in such a way is passed to a gluing press ensuring precise adhesion of the half-panels and their permanent gluing together under the pressure of at least 1.5 kg/cm², for the period from 20 to 40 seconds, and a semi-finished product obtained in this way is transported by the gripper and the manipulator to a shelving unit where from 5 to 15 semi-finished products are placed, which after the period of about 10 minutes after the adhesive has hardened are passed further for cutting out, after which they leave the line as finished products.

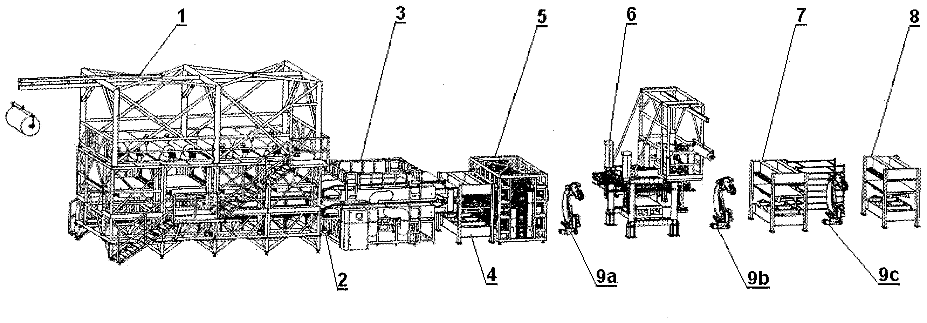

A production line for producing monomaterial panels of thermoformable nonwovens according to the invention is presented in a schematic view on the drawing and consists of a raw material unwinder **1**, a roller transportation system **2**, a flow-through furnace **3**, a forming press with a multi-level, thermostated pressing tool **4**, a cutting station **5**, a set of feeding manipulators **9a**, **9b**, **9c**, in the working area of which there is a WEB adhesive activation station **6**, a gluing press **7**, and a press **8** with a tool cutting out the finished product.

The raw material unwinder **1** is in the form of a multi-level feeder of nonwovens in the form of strips unwound from a roll and it is equipped with multi-socket automatic unwinders working at different speeds depending on the changing diameter of unwound rolls.

The feeder automatically unwinds the raw material at different speeds and an appropriate tension for each strip in such a way so as to obtain uniform distribution of the fabric on the whole surface. The raw material prepared in such a way is fed with belt conveyors to a specialist flow-through thermal tunnel designed for this purpose at the obtained appropriate feeding speed. The system of raw material feeders was designed in such a way so as to provide access to each of them with a mini-crane. The control system automatically detects the diameter of the roll for individual fabric strips, which enables appropriate adjustment of the raw material unwinding speed. The control system is fully autonomous, and the role of an employee is limited to installing the raw material roll in the proper slot of the unwinder and its mechanical connection to the previous, ending strip of fabric.

The roller transportation system **2** transports unwound nonwovens with a system of belt conveyors towards the next stage of the process. External nonwoven fabric, which does not participate in the heating up process, is transported outside of the heating up system, whereas the nonwoven fabric constituting the core of the product is transported through the flow-through furnace chambers.

The flow-through furnace **3** - to allow the raw material to obtain the necessary thermal energy needed for the thermoforming process, specialist thermal chambers were designed, through which the raw material constituting the core of the later finished product is transported with the use of belt conveyors passing through the inside of the thermal chambers.

The transported nonwoven fabric is covered with a layer of thermoactive adhesive which is activated when flowing through the thermal chambers. The temperature of the nonwoven fabric should fluctuate around 200 ± 20°C in its whole volume. The nonwoven fabric is cyclically moved across the furnace with a proper speed, which ensures its heating up to the desired temperature in its whole volume. The raw material must be stable as regards temperature in order to obtain appropriate forming parameters so that in the next thermoforming stage a formed product of a proper quality is obtained.

At the end of the heating up process there is a mouthpiece with a system of guide rollers.

Into the mouthpiece in which the heated up internal nonwoven fabric is located, a layer or layers of the external nonwoven fabric that do not participate in the heating up process, are introduced.

The task of the mouthpiece is to maintain the temperature of the internal nonwoven fabric and, through the system of guide rollers, to preliminarily glue together the internal layer with the activated adhesive and the external, aesthetic layer introduced into the mouthpiece from external belt conveyors prior to the forming process.

The forming press **4** - with a multi-level, thermostated pressing tool.

The preliminarily glued together systems of the internal and external nonwovens - there can be one or a few of them - leaving the mouthpiece, are moved into the daylight of the press equipped with a single- or multi-level system of thermostated pressing tools.

In this process, half-panels are formed and the introduced systems of nonwovens are cooled down in order to fix the set product design.

The cutting station **5** is equipped with a system of grippers - the number of the systems of grippers depends on the number of strips leaving the thermoforming process. The task of the grippers is to pull the nonwoven fabric strips leaving the forming press to the desired length.

The next activity is cutting off half-panels from the strips using controlled cutting devices and preparing them to be passed on to the next operation.

The cutting station **5** plays the role of the MASTER in the whole drive system of the line from the raw material unwinders **1,** through the roller transportation system **2** to the flow-through furnace **3**.

The cutting station system moves in accordance with the movement of the forming press **4** when closing and opening the multi-level pressing tool.

The feeding manipulator **9a** - after receiving a signal from the cutting station **5**, fetches consecutively cut off half-panels and passes them to the WEB adhesive activation station **6**. The task of the feeding manipulator **9a** is highly precise positioning and arranging half-panels for the next operation where the layers of the finished product are glued together.

The WEB adhesive activation station **6** - after the first half-panel is passed by the feeding manipulator **9a** the cycle of unwinding, cutting and feeding of a layer of the thermoactive WEB adhesive onto this half-panel is activated. The adhesive is in the form of nonwoven fabric. In the next step, the adhesive activation process is activated.

For this purpose a system of IR lamps moves over the prepared half-panel with the distributed adhesive, which switches on consecutive sections of radiators, activating the adhesive. After the IR lamps retract, the feeding manipulator **9a** supplies the other half-panel. The thus prepared set of half-panels is forwarded to the gluing press **7**.

The gluing press **7** - the task of the gluing press, equipped with a positioning tool prepared specifically for this purpose, is inseparable connection of two elements. A precondition for the correct fusion is then providing proper temperature conditions of the glued surfaces and of the gluing agent. These activities are performed automatically.

The feeding manipulator **9b** - subsequently, the product needs to be transported by a specialist gripper and the manipulator **9b** between the gluing press **7** and the semi-finished products storage unit in the form of a shelving unit for 5 - 15 glued panels. After the period of about 10 minutes, after the adhesive has hardened, the semi-finished products are then forwarded by the manipulator **9c** to be cut out on the cutting out press **8**.

The cutting out press **8** with a tool cutting out the finished product is equipped with a special punching die which automatically cuts out the finished product and an openwork which is a waste. The waste is intended for further reprocessing.

At the end of the whole production process an employee checks the product quality - performs the assessment of dimensions and effectiveness of gluing together of particular layers of the product.

The product can be additionally marked with an identification code containing batch information.

After positive assessment products are wrapped individually and then packaged collectively, and then, provided with appropriate installation instructions and labels, they are forwarded to the finished products warehouse.

The finished product obtained in the production process consists of the layers of internal nonwoven fabric joined with each other - constituting the core of the product, and the layers of the external nonwoven fabric - constituting the external, aesthetic part of the product, joined by the thermoactive adhesive in a various input form. External shape of the finished product can be chosen arbitrarily, and it is obtained in the process of thermoforming of the nonwovens joined together.

The line for the automatic production of panels of thermoformable nonwovens described above enables production of various sizes, shapes, external colours of panels and screen walls, which at the packaging stage are provided with various accessories depending on their later application. These can be standing screens, desk, hanging or wall panels. These products separate work stations from each other, constituting at the same time an aesthetic decoration of the interior, and due to their properties they positively influence the acoustic of the premises where they are used.

**Embodiment 1.** A method of producing monomaterial panels of thermoformable nonwovens consists in that from the multi-level feeder equipped with unwinders strips of nonwoven fabric of 1000 g.s.m. wound on them are fed in such a way so as to obtain their uniform distribution on the whole surface of belt conveyors which transport them to the thermal tunnel equipped with the flow-through furnace, where they are heated up to the temperature of 200°C, after which at the same time external nonwoven fabric of 300 g.s.m. which does not participate in the heating up process is transported outside of the heating up system by a system of belt conveyors, whereby the nonwoven fabric transported through the thermal tunnel is covered with a layer of thermoactive adhesive in the amount of 40 g.s.m., which is activated at the temperature of 200°C, and after passing through the thermal tunnel the heated up internal nonwoven fabric with the activated adhesive is introduced into a mouthpiece with a system of guide rollers, simultaneously a layer of the external nonwoven fabric is introduced into the mouthpiece from the external belt conveyors, where the layers of the internal nonwoven fabric with the activated adhesive are preliminarily glued together with the external layer of the nonwoven fabric introduced into the mouthpiece from the external belt conveyors, from where the preliminarily glued together layers of the internal and the external nonwoven fabric are moved into the daylight of the press equipped with a single-level system of thermostated pressing tools, where the final forming of half-panels and then cooling them down to the temperature of 50°C occur to fix the set shape and design of the product which is then supplied to the cutting station equipped with a system of grippers which pull to the desired length the strips of the half-panels leaving the forming press, where half-panels are cut off from the strips with controlled cutting devices and prepared for forwarding to the feeding manipulator which after receiving a signal from the cutting station fetches a cut-off half-panel and forwards it to the WEB adhesive activation station which activates the cycle of unwinding, cutting and feeding a layer of the WEB thermoactive adhesive in the amount of 60 g.s.m. in the form of nonwoven fabric, after which the process of adhesive activation is activated with infrared radiation emitted by a system of IR lamps which switches on consecutive sections of radiators providing the temperature of 90°C activating the adhesive, and after the IR lamps are retracted, the feeding manipulator places on the first half-panel with the activated adhesive the other half-panel, and a set of half-panels prepared in such a way is forwarded to the gluing press ensuring precise adhesion of the half-panels and their permanent gluing together under the pressure of at least 1.5 kg/cm² for the period from 20 seconds, and the semi-finished product obtained in such a way is transported by the gripper and the manipulator to a shelving unit, where 5 semi-finished products are placed, which after the period of about 10 minutes after the adhesive has hardened are then forwarded for cutting out, and then they leave the line as finished products.

**Embodiment 2.** A method of producing monomaterial panels of thermoformable nonwovens consists in that from the multi-level feeder equipped with unwinders strips of nonwoven fabric of 1100 g.s.m. wound on them are fed in such a way so as to obtain their uniform distribution on the whole surface of the belt conveyors which transport them to the thermal tunnel equipped with the flow-through furnace, where they are heated up to the temperature of 220°C, after which at the same time external nonwoven fabric of 330 g.s.m. which does not participate in the heating up process is transported outside of the heating up system by a system of belt conveyors, whereby the nonwoven fabric transported through the thermal tunnel is covered with a layer of thermoactive adhesive in the amount of 45 g.s.m., which is activated at the temperature of 220°C, and after passing through the thermal tunnel the heated up internal nonwoven fabric with the activated adhesive is introduced into a mouthpiece with a system of guide rollers, simultaneously 2 layers of external nonwoven fabric are introduced into the mouthpiece from the external belt conveyors, where the layers of the internal nonwoven fabric with the activated adhesive are preliminarily glued together with the external layer introduced into the mouthpiece from the external belt conveyors, from where the preliminarily glued together layers of the internal and the external nonwoven fabric are moved into the daylight of the press equipped with a multi-level system of thermostated pressing tools, where the final forming of half-panels and then cooling them down to the temperature of 60°C occur to fix the set shape and design of the product which is then supplied to the cutting station equipped with a system of grippers which pull to the desired length the strips of half-panels leaving the forming press, where half-panels are cut off from the strips with controlled cutting devices and prepared for forwarding them to the feeding manipulator which after receiving a signal from the cutting station fetches the cut-off half-panel and forwards it to the WEB adhesive activation station which activates the cycle of unwinding, cutting and feeding a layer of the WEB thermoactive adhesive in the amount of 65 g.s.m. in the form of nonwoven fabric, after which the process of adhesive activation is activated with infrared radiation emitted by a system of IR lamps which switches on consecutive sections of radiators providing the temperature from 140°C activating the adhesive, and after the IR lamps are retracted, the feeding manipulator places on the first half-panel with the activated adhesive the other half-panel, and a set of half-panels prepared in such a way is forwarded to the gluing press ensuring precise adhesion of the half-panels and their permanent gluing together under the pressure of at least 1.5 kg/cm² for the period of 40 seconds, and the semi-finished product obtained in such a way is transported by the gripper and the manipulator to a shelving unit, where 15 semi-finished products are placed which after the period of about 10 minutes after the adhesive has hardened are then forwarded for cutting out, and then they leave the line as finished products.

## Claims

1. method of producing monomaterial panels of thermoformable nonwovens **characterised in that** from a multi-level feeder equipped with unwinders, strips of nonwoven fabric of 1000 ± 100 g.s.m. wound on them are fed in such a way so as to obtain their uniform distribution on the whole surface of belt conveyors that transport them to a thermal tunnel equipped with a flow-through furnace, where they are heated up to the temperature of 200 ± 20°C, after which, simultaneously, external nonwoven fabric of 300 ± 30 g.s.m. that does not participate in the heating up process is transported outside of the heating up system with a system of belt conveyors, whereby the nonwoven fabric transported through the thermal tunnel is covered with a layer of thermoactive adhesive in the amount of 40 ± 5 g.s.m. which is activated at the temperature of 200 ± 20°C, and after passing through the thermal tunnel, the heated up internal nonwoven fabric with the activated adhesive is introduced into a mouthpiece with a system of guide rollers, at the same time into the mouthpiece a layer or more layers of the external nonwoven fabric are introduced from the external belt conveyors, where preliminary gluing of the layers of the internal nonwoven fabric with the activated adhesive and the external layer introduced into the mouthpiece from the external belt conveyors occurs, from where the preliminarily glued layers of the internal and external nonwoven fabric leaving the mouthpiece are moved into a daylight of a press equipped with at least a single- or multi-level system of thermostated pressing tools, where the final forming of half-panels and then cooling them to the temperature of 50°C ± 10°C occur in order to fix the set shape and design of the product which is later supplied to a cutting station equipped with a system of grippers which pull the half-panel strips leaving the forming press to a desired length, where half-panels are cut off from the strips with controlled cutting devices and prepared for passing to a feeding manipulator which, after receiving a signal from the cutting station, fetches the cut-off half-panel and passes it to a WEB adhesive activation station which activates the cycle of unwinding, cutting and feeding the layer of the WEB thermoactive adhesive in the amount of 60 ± 5 g.s.m., preferably in the form of nonwoven fabric, after which the process of activation of the adhesive with infrared radiation emitted by a system of IR lamps which switches on consecutive sections of radiators providing the temperature from 90°C to 140°C activating the adhesive, is activated, and after the IR lamps are retracted, the feeding manipulator applies on the first half-panel with the activated adhesive the other half-panel, and a set of half-panels prepared in such a way is passed to a gluing press ensuring precise adhesion of the half-panels and their permanent gluing together under the pressure of at least 1.5 kg/cm², for the period from 20 to 40 seconds and a semi-finished product obtained in this way is transported by the gripper and the manipulator to a shelving unit where from 5 to 15 semi-finished products are placed, which after the period of about 10 minutes after the adhesive has hardened are then passed for cutting out, after which they leave the line as finished products.
